# EUROPEAN PATENT SPECIFICATION

(11) **EP 0 374 424 B1**
(45) Date of publication and mention of the grant of the patent: **11.01.1995**
(21) Application number: 89119634.7
(22) Date of filing: 23.10.1989
(51) Int. Cl.: C22C 26/00

(54) **Silicon infiltrated porous polycrystalline diamond compacts and their fabrications**
Mit Silizium infiltrierte poröse polykristalline Diamantkörper
Comprimé poreux infiltré par du silicium à partir de diamant polycristallin et procédé de fabrication

(30) Priority: 30.11.1988 US 277885
(43) Date of publication of application: 27.06.1990
(73) Proprietor: GENERAL ELECTRIC COMPANY, Schenectady New York 12305 (US)
(72) Inventor: Cho, Hyun Sam, Sandy, UT 84091 (US)
(74) Representative: Pratt, Richard Wilson

(56) References cited:
- EP-A- 0 116 403
- EP-A- 0 208 414
- EP-A- 0 246 118
- GB-A- 2 158 086
- US-A- 4 220 455
- US-A- 4 242 106
- US-A- 4 664 705

## Description

### Background of the Invention

The present invention relates to thermally-stable, polycrystalline diamond compacts and more particularly to the silicon-infiltration thereof for enhancing their performance.

Well-known in the superabrasive art are compacts of polycrystalline abrasive particles typified by polycrystalline diamond and polycrystalline cubic boron nitride (CBN) compacts. Such compacts are represented by U.S. Pats. Pub. Nos. 3,745,623 and 3,608,818 with respect to polycrystalline diamond compacts and U.S. Pats. Pub. Nos. 3,767,371 and 3,743,489 with respect to polycrystalline CBN compacts. While such polycrystalline compacts represent a significant contribution to the art in many fields of use, thermal degradation at an elevated temperature, e.g. above about 700°C, limited their usefulness, especially in metal matrix bond applications. Thermal stability of such polycrystalline compacts was improved with the advent of thermally-stable, porous self-bonded diamond and CBN compacts containing less than 3% non-diamond phase, hereinafter termed "porous compacts". Compacts of this type are the subject of U.S. Pats. Pub. Nos. 4,224,380 and 4,288,248.

European Patent Publication No. 116,403 describes a thermally-stable diamond compact comprising a mass of diamond particles present in an amount of 80 to 90 percent by volume of the compact and a second phase present in an amount of 10 to 20 percent by volume of the compact, the mass of diamond particles containing substantially diamond-to-diamond bonding to form a coherent skeletal mass and the second phase containing nickel and silicon, the nickel being in the form of nickel and/or nickel silicide in and the silicon being in the form of silicon, silicon carbide, and/or nickel silicide. GB-A-2 158 086 describes a thermally-stable diamond compact comprising a mass of diamond particles present in an amount of 80 to 90 percent by volume of the compact and a second phase present in an amount of 10 to 20 percent by volume of the compact, the mass of diamond particles containing substantially diamond-to-diamond bonding to form a coherent skeletal mass and a second phase consisting of silicon, the silicon being in the form of silicon and/or silicon carbide.

Silicon-bonded polycrystalline diamond compacts also have been formed by a process which utilizes a partial vacuum for infiltrating fluid silicon into a mass of discrete diamond or CBN crystals, as disclosed in U.S. Pat. Pub. No. 4,220,455. Somewhat similar processes are disclosed in U.S. Pats. Pub. Nos. 4,238,433 and 4,242,106. An improvement to such fabrication technique is disclosed in U.S. Pat. Pub. No. 4,381,271 wherein a substantialy uniform mixture of diamond or CBN crystals and fibrous graphite are infiltrated with fluid silicon under a partial vacuum at a temperature above 1400°C wherein the fibrous graphite has been subjected to a heat treatment operation under vacuum at a temperature of between about 800° and 1700°C. US-A-4 664 705 discloses a method for producing a polycrystalline compact which comprises infiltrating a silicon containing alloy into a compact of polycrystalline diamond, PCD. The infiltration is carried out at high pressures rather than at the partial vacuum of the present invention.

### Broad Statement of the Invention

The present invention is addressed to porous compacts in general and more particularly to improving their properties and performance during use. One aspect of the present invention is a method for producing a polycrystalline diamond compact which comprises providing a thermally-stable, porous compact comprising between about 70% and 95% by volume self-bonded diamond particles and containing a network of interconnected empty pores dispersed throughout and between 0.05% and 3% by volume of a catalyst/sintering aid material. The porous compact and a silicon infiltrant are subjected to a partial vacuum and elevated temperature for a time adequate for the silicon infiltrant to infiltrate into and occupy the compact pores. The silicon infiltrant has a melting point not above about 1410°C. Preferably, a silicon alloy comprises the silicon infiltrant and has a melting point of less than about 1200°C-1300°C., i.e. between about 600°C and 1400°C.

Polycrystalline diamond or CBN compacts obtained by the method of the present invention may comprise self-bonded diamond particles comprising between about 70% and 95% volume of the compact and containing a silicon alloy phase comprising between about 5% and 30% by volume of the compact. The compact contains less than about 3% by volume of a metallic phase not associated with said silicon alloy phase.

Advantages of the present invention include a polycrystalline abrasive compact which substantially maintains its thermal stability while possessing improved mechanical strength, oxidation resitance, and/or wear resistance. Consequently, the inventive compact should possess improved resistance against impact or fracture loadings due to the substantial absenc of empty pores. Longer life exptectency of tool components containing the inventive polycrystalline compacts also should result. Electrically conductive properties would be expected to be exhibited by the infiltrated compact also. These and other advantages will be readily apparent to those skilled in the art based upon the disclosure contained herein.

### Detailed Description of the Invention

Porous compacts, as disclosed in U.S. Pats. Pub. Nos. 4,224,380 and 4,288,248 are "thermally stable" by being able to withstand a temperature of about 1200°C in a vacuum without may significant structural degradation which compromises the utility of the compacts occurring. As these patents note, the porous compacts have substantially no residual metallic phase to catalyze brick-conversion of the abrasive particle bonds and/or to expand and thereby break the particle bonds, these being the two mechanisms by which it was theorized that prior compacts thermally degraded at high temperature. Consequently, care must be exercised in proposing to add-back a non-diamond or non-CBN component to the porous compacts. Nevertheless, impact strengths of porous compacts should be improved were the pores not present. The challenge, then, is to be able to retain the excellent thermal stability of porous compacts while concomitantly eliminating the empty pores for improving the wear resistance, oxidation resistance, and/or impact strength properties of the resulting processed compact.

Fortuitously, it was discovered that silicon and silicon-containing materials could successfully be infiltrated into porous compacts under conditions wherein the pores contain a silicon-base material, yet under conditions whereby substantially no loss of thermal stability of the resulting compacts occurs. It will be appreciated that complete infiltration of the silicon material may not be necessary since the working surface of the compacts are external in most applications, including drilling and tool dressing applications. Thus, a core area within the compact may not be infiltrated and still an improved compact results. For wire drawing applications, the central non-infiltrated zone may be removed during the drilling opewration or the hole may be formed prior to the silicon infiltration process, thereby ensuring infiltration of the silicon in the sidewalls of the centrally-disposed hole through which wire will be drawn. Finally, only a coating of the pores by the silicon infiltration has been observed in some areas of samples. Improvement in some properties by virtue of such coating still would be expected.

While pure silicon can be infiltrated, testing has shown that some diamond-to-diamond bonding can be damaged due to the relatively high temperature of infiltration (ca. > 1410°C, 2-10 minutes) though silicon bonding of the diamond particles within these areas does occur and provide strength to such areas. For lowering the filtration temperatures required during the vacuum in filtration process, silicon alloys should be used. The following table presents various silicon alloys with their corresponding melting range:

| Alloy | Melting Range (°C) |
|---|---|
| Si/Ag | 830-1410 |
| Si/Al | 577-1410 |
| Si/Co | 1200 min. |
| Si/Cr | 1305-1410 |
| Si/Cu | 800-1410 |
| Si/Fe | 1200 min. |
| Si/Ge | 940-1410 |
| Si/Mn | 1040-1410 |
| Si/Ni | 980-1410 |
| Si/Re | 1380-1410 |

Additional alloying materials include, for example, As, Au, B, Ca, Nb, Ce, Cr, Ga, Ge, In, Mg, and the like.

For example, a silicon/copper eutectic comprising 60 wt-% silicon/40 wt-% copper melts at about 1270°C. Infiltration with such an alloy substantially minimizes, if not precludes, damage to crystal-crystal bonding within the porous compact being subjected to the vacuum infiltration process. Samples infiltrated with this Si/Cu eutectic composition were visually inspected to confirm the presence of silicon with a minimum of copper. Some interior areas still retained non-infiltrated porosity while other areas appeared to contain porosity wherein the pore walls (diamond crystals) were coated with a thin layer of silicon infiltrant. SEM photomicrographs confirmed the infiltration of the Si/Cu infiltrant and also revealed multiple fine micro-cracks within the crystals which may provide additional cutting edges during its use as a tool. Samples were cut in half with a wire electrical discharge machining method which is dependent on the electrical conductivity of the infiltrant for success. This, therefore, indicates infiltration into the entire piece.

The silicon or silicon alloy infiltrant can be provided in a variety of forms including as a powder, as a wafer or disk, or other form. Processing comprehends maintenance of a partial vacuum, e.g. less about 13,3Pa (100 millitorr) for a time period adequate for the desired degree of infiltration to occur. Often, time ranges between about 2 and 20 minutes can be useful. Thereafter, the temperature is reduced and the vacuum in the vacuum furnace removed for recovery of the product. The recovered product can be cleaned of excess silicon infiltrant, if present, by conventional lapping operations. The novel product then can be formed into a variety of shapes for use as a tool insert as the art teaches.

## Claims

1. A method for producing a polycrystalline diamond compact, which comprises:
(a) providing a thermally-stable compact comprising between about 70% and 95% by volume self-bonded diamond particles containing a network of interconnected, empty pores dispersed throughout, and containing between 0.05% and 3% by volume of a catalyst/sintering aid material; and
(b) subjecting said thermally-stable compact and a silicon infiltrant to a partial vacuum and elevated temperature for a time adequate for said silicon infiltrant to infiltrate into said compact pores, said silicon infiltrant having a melting point not above about 1410°C.

2. The method of claim 1 wherein said silicon infiltrant comprises a silicon alloy.

3. The method of claim 2 wherein said silicon alloy has a melting point range of between about 800° and 1410°C.

4. The method of claim 2 wherein said silicon alloy is selected from the group consisting of silicon/silver, silicon/aluminum, silicon/cobalt, silicon/copper, silicon/iron, silicon/manganese, silicon/nickel, silicon/chromium, silicon/germanium, silicon/rhenium, silicon/arsenic, silicon/gold, silicon/boron, silicon/calcium, silicon/niobium, silicon/cerium, silicon/gallium, silicon/indium, and mixtures thereof.

5. The method of claim 1 wherein said partial vacuum is less than about 13.3 Pa (100 millitorr).

6. The method of claim 1 wherein said time ranges from between about 2 and 20 minutes.

## Patentansprüche

1. Verfahren zum Herstellen eines Preßlings aus polykristallinem Diamant, umfassend
(a) Schaffen eines thermisch stabilen Preßlings, der zwischen etwa 70 und 95 vol.-% selbstgebundene Diamantteilchen umfaßt und ein Netzwerk miteinander verbundener leerer Poren, die durch den Preßling dispergiert sind, und zwischen 0,05 und 3 Vol.-% eines Katalysator/Sinterhilfsmaterials enthält und
(b) Aussetzen des thermisch stabilen Preßlings und eines Silicium-Infiltrationsmittels gegenüber einem Teilvakuum und erhöhter Temperatur für eine Zeit, die zum Infiltrieren der Preßlingsporen durch das Silicium-Infiltrationsmittel angemessen ist, wobei das Silicium-Infiltrationsmittel einen Schmelzpunkt nicht über etwa 1.410°C hat.

2. Verfahren nach Anspruch 1, worin das Silicium-Infiltrationsmittel eine Siliciumlegierung umfaßt.

3. Verfahren nach Anspruch 2, worin die Silicium-Legierung einen Schmelzpunktbereich zwischen etwa 800 und 1.410°C hat.

4. Verfahren nach Anspruch 2, worin die Silicium-Legierung ausgewählt ist aus der Gruppe bestehend aus Silicium/Silber, Silicium/Aluminium, Silicium/Cobalt, Silicium/Kupfer, Silicium/Eisen, Silicium/Mangan, Silicium/Nickel, Silicium/Chrom, Silicium/Germanium, Silicium/Rhenium, Silicium/Arsen, Silicium/Gold, Silicium/Bor, Silicium/Calcium, Silicium/Niob, Silicium/Cer, Silicium/Gallium, Silicium/Indium und deren Mischungen.

5. Verfahren nach Anspruch 1, worin das Teilvakuum geringer als etwa 13,3 Pa (100 mTorr) ist.

6. Verfahren nach Anspruch 1, worin die Zeit im Bereich von etwa 2 bis 20 Minuten liegt.

## Revendications

1. Procédé de production d'un comprimé de diamant polycristallin, qui comprend les étapes consistant à :
(a) fournir un comprimé thermostable, comprenant d'environ 70 % à environ 95 % en volume de particules de diamant autoliées, contenant un réseau de pores vides, reliés entre eux, dispersés dans tout le comprimé, et contenant de 0,05 % à 3 % en volume d'un catalyseur/produit aidant au frittage, et
(b) soumettre ledit comprimé thermostable et un produit d'infiltration à base de silicium, à un vide partiel et une température élevée, pendant un temps suffisant pour permettre l'infiltration dudit produit d'infiltration à base de silicium dans lesdits pores du comprimé, ledit produit d'infiltration à base de silicium ayant un point de fusion non supérieur à environ 1410°C.

2. Procédé selon la revendication 1, dans lequel ledit produit d'infiltration à base de silicium comprend un alliage de silicium.

3. Procédé selon la revendication 2, dans lequel ledit alliage de silicium présente un point de fusion compris dans l'intervalle allant d'environ 800°C à environ 1410°C.

4. Procédé selon la revendication 2, dans lequel ledit alliage de silicium est choisi dans le groupe constitué des alliages silicium/argent, silicium/aluminium, silicium/cobalt, silicium/cuivre, silicium/fer, silicium/manganèse, silicium/nickel, silicium/chrome, silicium/germanium, silicium/rhénium, silicium/arsenic, silicium/or, silicium/bore, silicium/calcium, silicium/niobium, silicium/cérium, silicium/gallium, silicium/indium, et leurs mélanges.

5. Procédé selon la revendication 1, dans lequel ledit vide partiel correspond à une pression inférieure à environ 13,3 Pa (100 millitorr).

6. Procédé selon la revendication 1, dans lequel ledit temps est compris dans l'intervalle allant d'environ 2 minutes à environ 20 minutes.
